# EUROPEAN PATENT SPECIFICATION

(11) **EP 3 435 780 B1**
(45) Date of publication and mention of the grant of the patent: **11.12.2019**
(21) Application number: 17718642.6
(22) Date of filing: 28.03.2017
(51) Int. Cl.: A23J 1/14, A23L 11/00, A23L 33/00, A23L 33/185, A23L 29/206, A23L 29/225, A23L 29/231, A23L 19/00, A23L 13/40, A23L 13/60, A23C 20/00, A21D 13/045, A23K 20/147, A23K 20/163, A23J 3/22, A23L 29/238

(54) **BLENDS OF OKARA AND A FIBER-CONTAINING PECTIN PRODUCT**
MISCHUNGEN AUS OKARA UND EINEM FASERHALTIGEN PEKTINPRODUKT
MÉLANGES D'OKARA ET D'UN PRODUIT DE PECTINE CONTENANT DES FIBRES

(30) Priority: 30.03.2016 US 201662315045 P
(43) Date of publication of application: 06.02.2019
(73) Proprietor: Dow Global Technologies, LLC, Midland, MI 48674 (US)
(72) Inventor: DEO, Puspendu, Midland, MI 48641 (US); LI, Yongfu, Midland, MI 48667 (US); CHATTERJEE, Tirtha, Midland, MI 48674 (US); STEMPEK, Ryan, Midland, MI 48641 (US)
(74) Representative: DuPont EMEA
(86) International application number: PCT/US2017/024476
(87) International publication number: WO 2017/172718

(56) References cited:
- EP-A1- 1 723 856
- US-A1- 2007 269 571
- US-A1- 2010 112 187
- YOSHII H ET AL: "HYDROLYSIS KINETICS OF OKARA AND CHARACTERIZATION OF ITS WATER-SOLUBLE POLYSACCHARIDES", POSTHARVEST BIOLOGY AND TECHNO, ELSEVIER, NL, vol. 60, no. 9, 1 January 1996 (1996-01-01), pages 1406-1409, XP009080733, ISSN: 0925-5214

## Description

### FIELD

This invention relates to a composition that comprises (a) okara and (b) a fiber-containing pectin product.

### INTRODUCTION

Soybeans are an important food crop used in a wide variety of food products. US Patent Publication US 2010/0112187 describes meat analog patties containing soy proteins. A prophetic example discloses a meat analog patty comprising a soy protein composition, hexane free protein granules, wheat gluten, organic soybean oil, methyl cellulose, organic TVP (nutrient), organic soy okara, water and minor additives, such as salt. Okara and methyl cellulose are known thickening and/or binding agents. In the prophetic example the amount of soy okara is 3 wt. % and the amount of methyl cellulose is 1.5 weight percent, based on the total weight of the meat analog patty. Providing recipes for meat analog patties with a reduced amount or even no amount of methyl cellulose is often desirable for reducing the costs of the meat analog patties. Unfortunately, okara is not a sufficiently strong binder. Even when the amount of soy okara is increased to 5 weight percent, the meat analog patties still do not have sufficient adhesion. It would be desirable to find other ways of increasing the thickening and/or binding capacity of okara than by combining okara with methyl cellulose.

EP 1 723 856 A1 relates to a mixture of citrus fruit fibers and soy protein.

US 2007/0269571 discloses a processed food containing as main component a soybean protein.

Surprisingly, it has been found that the thickening and/or binding capacity of okara can be increased by combining okara with a fiber-containing pectin product or pectin.

### SUMMARY

Accordingly, one aspect of the present invention is a composition which comprises (a) okara, and (b) a fiber-containing pectin product, wherein the weight ratio between components (a) and (b) is from 4 : 1 to 6 : 1.

Another aspect of the present invention is a method of improving one or more of the properties of a food composition selected from cohesion, firmness, juiciness, freeze thaw stability or texture; resistance to shrinking during cooking, or boil-out control, which method comprises the step of incorporating into the composition a combination of (a) okara, and (b) a fiber-containing pectin product wherein the weight ratio between components (a) and (b) is from 4 : 1 to 6 : 1.

### DESCRIPTION OF EMBODIMENTS

Component (a) of the composition of the present invention is okara.

Okara is produced during the processing of soybeans. Okara is often considered to be a by-product from the production of tofu and/or soy milk. In a typical process of processing soybeans, the soybeans are pureed, chopped, ground, or otherwise reduced in size; then the soybeans are mixed with water and heated to a temperature above 25°C; then the resulting mixture is filtered to form a liquid portion and a solid portion. In this typical processing scheme, the liquid portion is soy milk and the solid portion is okara. Dry okara typically contains 30% to 70% by weight dietary fiber, 10% to 40% by weight protein, 5% to 20% by weight lipids, and 5% to 30% by weight other compounds. A process for producing soybean milk, also designated as soy milk, and okara is described in European Patent Application EP 0 875 151.

Whole soy is a product made by grinding soy beans. Whole soy is normally supplied in the form of a powder.

Component (b) of the composition of the present invention is a fiber-containing pectin product. A fiber-containing pectin product can be obtained from citrus peel or from apple pomace which is a waste product from the juice industry. One method of producing a fiber-containing pectin product or pectin is described in International Patent Application WO 2013/109721, wherein citrus peel is treated to obtain homogenized citrus peel, the homogenized citrus peel is washed with an organic solvent, followed by a desolventizing and drying step to recover the fiber-containing pectin product or pectin. Preferably a comminuting or pulverizing step is carried out after the drying step.

Preferably a fiber-containing pectin product is obtained according to the process described in U.S. Patent No. 7,833,558. U.S. Patent No. 7,833,558 describes a method of providing a fiber-containing pectin product from a plant material which comprises the steps of (i) providing an in situ reaction system by swelling the plant material in an aqueous solution comprising at least one salt, (ii) subjecting pectin present in the swollen plant material from step (i) to a de-esterification treatment, and (iii) separating the de-esterified fiber-containing pectin product. The plant material is preferably a native pectin-containing plant materials including peels or pulp from citrus fruits, such as lemon, orange, mandarin, lime and grapefruit. The aqueous solution used for the swelling step (i) preferably does not contain an organic solvent. The aqueous solution, in which the pectin-containing plant starting material is swelled, may contain at least one added water-soluble and neutral salt, such as sodium salts, potassium salts and calcium salts, and mixtures thereof. Particularly preferred are chlorides. The amount of salt added to the aqueous solution, in which the pectin-containing plant starting material is suspended and swelled, is preferably selected so that it corresponds to a salt concentration of from 1 mmol to 30 mmol per gram of dry matter of pectin-containing plant material. In the de-esterification treatment step (ii) the pectin-containing plant material is preferably treated with an alkaline reagent having a pH ranging from 7-14, preferably from 9-13, such as from 10-12. Preferred alkaline reagents are calcium hydroxide and sodium hydroxide or, most preferably, ammonia. During the de-esterification with e.g. ammonia in the aqueous reaction mixture, there is a competition between the two nucleophiles (NH₃ and OH), for which reason the de-esterification with OH, i.e., substitution of OCH₃ in the methyl-esterified carboxyl groups in pectin by OH forming COOH, may be accompanied by amidation, in which OCH₃ is replaced by NH₂ forming carboxamide groups, which, under the de-esterifying conditions, may result in at least 20% and no more than 70%, typically from 25% to 50%, of the methyl-esterified carboxyl groups in pectin being transformed into carboxamide groups. The treated plant material (after being subjected to de-esterification and optionally amidation) may by separated from the e.g. alkaline reaction mixture and subjected to at least one washing step and/or at least one pressing step, optionally followed by a drying step and a comminution step, to obtain a fiber-containing pectin product. The separation of the treated plant material from the reaction mixture may be carried out by any appropriate method, such as draining, filtration or centrifugation. The separated plant material treated with alkaline reagent may be washed at least once by suspending the material in aqueous mineral acid, such as sulphuric acid, hydrochloric acid or nitric acid, so that the pH in the suspension is from 1-6. Subsequently the washed plant material is separated and may then be washed at least once with water by resuspending it, e.g. in demineralised water. The fiber-containing pectin product obtained may be dried to a dry matter content of at least 40% by weight, such as at least 70% by weight, or even at least 90% by weight. By this process fiber-containing pectin products are provided with a degree of esterification of from 2% to 40%, a degree of amidation of no more than 30%, and a dry matter content of at least 16% by weight. U.S. Patent No. 7,833,558 discloses that the fiber-containing pectin products are able to form a stable gel or a viscous solution with calcium ions in an aqueous solution containing from 25 to 65% by weight, such as from 25 to 50% by weight of saccharose, the pH of the solution being in the range of 1-7, such as about 3. The fiber-containing pectin product is a product that comprises pectin and fibers, preferably citrus fibers. The pectin content can vary; it is generally from 10 to 85 %, typically from 20 to 60 %, and more typically from 35 to 45 % by weight of pectin, based on the total dry weight of pectin and fibers. The remaining amount is typically fibers like cellulose or hemicellulose.

Pectin is a linear polymer composed of units of a-D-galacturonic acid attached by a-1,4-glycoside bonds to form long chains of polygalacturonic acid. The galacturonic acid units are esterified with methanol to a varying degree. A distinction is thus made between high-ester pectin having a degree of esterification of greater than 50% and low-ester pectin having a degree of esterification of less than 50%. The degree of esterification is defined as the number of methyl-esterified galacturonic acid units expressed as a percentage of the total galacturonic acid units in the pectin molecule and may thus be a value between 0% and 100%. These two groups of pectin gel by different mechanisms. High-ester-pectin requires a minimum amount of soluble solids and a pH within a narrow range, around 3.0, in order to form gels. High-ester-pectin gels are thermally reversible. In general, high-ester-pectins are hot water soluble and often contain a dispersion agent such as dextrose to prevent lumping. Low-ester-pectins produce gels independent of sugar content. They also are not as sensitive to pH as the high-ester-pectins are. Low-ester-pectins require the presence of a controlled amount of calcium or other divalent cations for gelation. The chemical properties of pectin are described in more detail in Gum Technology in food industry: Chapter 6, Pectins, Industrial Gums: Polysaccharides and their derivatives: Chapter 10, Chemistry of Pectin and Its Pharmaceutical Uses: A Review, pages 208 - 228 by Pornsak Sriamornsak. Pectin is preferably a pectin product obtainable according to the process described in U.S. Patent No. 7,833,558. U.S. Patent No. 7,833,558 describes a method for providing a pectin product comprising the steps of: i) providing a fiber-containing pectin product according to the process described further above, ii) adding an extraction medium to the fiber-containing pectin product providing an aqueous extraction suspension, (iii) adjusting the pH of the extraction suspension to a pH in the range of 1-12, such as in the range of 1-7, e.g. by addition of a strong acid or a base, (iv) adjusting the temperature of the extraction suspension to a temperature in the range of 0-120° C, such as in the range of 60-80° C, and (v) isolating the pectin product from the aqueous phase of the extracting medium.

The combination of (a) okara, and (b) a fiber-containing pectin product is useful for improving one or more of the properties of a food composition selected from cohesion, firmness, juiciness, freeze thaw stability or texture; resistance to shrinking during cooking, or boil-out control. The combination of the components (a) and (b) is particularly useful for improving the cohesion and/or firmness of a food composition. Surprisingly, it has been found that the combination of the components (a) and (b) is much more effective than the components (a) or (b) individually.

The weight ratio between components (a) and (b) in the composition of the present invention is at least 4 : 1 and up to 6 : 1.

Preferably the amount of component (a) is, by weight based on the weight of the composition, 0.5% or more, more preferably 1% or more; even more preferably 2% or more, and most preferably 4% or more. Preferably the amount of component (a) is, by weight based on the weight of the composition, 15% or less, preferably 12% or less; even more preferably 9% or less; and most preferably 6% or less.

Preferably the amount of component (b) is, by weight based on the weight of the composition, 0.2% or more, more preferably 0.4% or more; even more preferably 0.6% or more, and most preferably 0.8% or more. Preferably the amount of component (b) is, by weight based on the weight of the composition, 5% or less, preferably 2.5% or less; even more preferably 1.6% or less; and most preferably 1.2% or less.

Preferably, the composition of the present invention comprises water. Preferably, the amount of water, by weight based on the composition, is 20% or more; more preferably 30% or more; even more preferably 40% or more; and most preferably 50% or more. Preferably, the amount of water, by weight based on the composition, is 80% or less; more preferably 70% or less.

Preferably, the composition of the present invention comprises from 5% to 80% by weight, based on the weight of the composition, of one or more dry ingredients selected from sodium chloride, one or more sugars, flavoring agents, gluten, one or more proteins in a form being different from okara and being different from whole soy, and mixtures thereof.

Preferably, the composition of the present invention comprises one or more proteins in addition to the okara, whole soy, or mixture thereof. Proteins are molecules that contain chains of amino acid residues. Proteins contain 30 or more residues of amino acids. Proteins that have been removed from a plant are known as plant proteins. Preferred proteins are plant proteins; more preferred are proteins from soy, proteins from wheat, and mixtures thereof. It is to be understood that these proteins are in a form that is different from okara and different from whole soy. Preferably the amount of proteins, by weight based on the weight of the composition, is 5% or more; more preferably 10% or more; and most preferably 15% or more. Preferably the amount of proteins, by weight based on the weight of the composition, is 40% or less; more preferably 30% or less; and most preferably 25% or less.

Preferably, the composition of the present invention contains one or more sugars. As used herein, the term "sugar" refers to monosaccharides and disaccharides. Preferred sugars are sucrose, fructose, glucose (also known as dextrose), and mixtures thereof. Preferably the amount of sugar is, by weight based on the weight of the composition, 0.1% or more; more preferably 0.2% or more; and most preferably 0.3% or more. Preferably the amount of sugar is, by weight based on the weight of the composition, 5% or less; more preferably 3% or less; and most preferably 1% or less.

Preferably, the composition of the present invention contains sodium chloride. Preferably, the amount of sodium chloride is, by weight based on the weight of the composition, 0.05% or more; more preferably 0.1% or more; and most preferably 0.2% or more. Preferably, the amount of sodium chloride is, by weight based on the weight of the composition, 5% or less; more preferably 2% or less; even more preferably 1% or less; and most preferably 0.5% or less.

Preferably, the composition of the present invention contains one or more vegetable oils. Vegetable oils are compounds that have been removed from plants. Vegetable oils are triglycerides, which have the structure of tri-esters of carboxylic acids with glycerol. In vegetable oils, each residue of the carboxylic acids has 12 or more carbon atoms. Preferably, the amount of vegetable oils is, by weight based on the weight of the composition, 1% or more; more preferably 2% or more. Preferably, the amount of vegetable oils is, by weight based on the weight of the composition, 20% or less; more preferably 10% or less.

Preferably, the composition of the present invention contains gluten. Preferably, the amount of gluten is, by weight based on the weight of the composition, 1% or more; more preferably 2% or more. Preferably, the amount of gluten is, by weight based on the weight of the composition, 10% or less; more preferably 5% or less.

Components (a) and (b) of the composition of the present invention , i.e., (a) okara or whole soy or a mixture thereof, and (b) a fiber-containing pectin product or pectin are preferably incorporated in solid food compositions, particularly in solid food compositions designed to be heat-treated, such as food compositions to be fried, roasted, grilled, cooked, baked or poached. Preferred food compositions are vegetable, meat, fish and soy patties and balls, vegetable, meat, fish and soy sausages, shaped vegetable, meat, fish and soy products, reformed seafood; reformed cheese sticks; onion rings; pie filling; pasta fillings, heated and baked sweet and savory fillings, starch based fried, baked, grilled, roasted, cooked, baked and poached products, meat analogues, shaped potato products, such as croquettes, pommes duchesses, hash browns, pancakes, waffles, and cakes; chewing sweets, pet foods; leavened and unleavened baked goods, such as breads; and the like.

In a preferred aspect of the invention, the food composition is a proteinaceous food composition, particularly proteinaceous vegetarian food, such as soy sausages and patties, meatless meatballs and tofu turkey rolls. Preferably, the composition of the present invention either contains no meat or else, if meat is present, contains an amount of meat that is 0.1% or less by weight, based on the weight of the composition.

In forming food compositions, components (a) and (b) are typically admixed with foodstuffs during the process and formation of the compositions. The food composition of the present invention can be a frozen shaped or pre-cut product, an uncooked premix or a shaped or pre-cut cooked product, such as a fried, roasted, grilled, cooked or poached product. Components (a) and (b) provide excellent stability of the food composition during and after cooking. The achieved stability is much higher than achieved with components (a) or (b) individually, as shown in the Examples.

A preferred use for the composition of the present invention is the formation of patties. A patty is a solid object that typically weighs from 50 grams to 500 grams. Preferred patties have smallest dimension of 3 cm or less; more preferably 2 cm or less. Preferred patties have circular, hexagonal, or square symmetry around the axis defined by the smallest dimension; more preferred is circular symmetry.

Preferably, patties are formed by a process that takes place at temperatures between 5°C and 30°C. Preferably, the process of forming the patties includes bringing the ingredients of the composition of the present invention into contact with each other, then mechanically mixing to blend the ingredients. Preferably, portions of the resulting mixture are formed into patties. Preferably, patties are frozen, e.g., at a temperature of from -15° C to -20° C, after formation and prior to cooking. Preferably, patties are cooked after freezing. Cooking may be performed by any method that exposes the patties to elevated temperature sufficient to raise the internal temperature of the patty to 60°C or higher. Preferably, patties hold their shape when placed on a flat surface at 25°C for 10 minutes, after the completion of the cooking process.

Components (a) and (b) in combination improve the rheology of the composition of the present invention, including the flow characteristics of liquid formulations and/or the hardness of solid formulations, such as edible formulations. The term "improving the flow characteristics of liquid formulations" as used herein means decrease in flowability of a liquid formulation or complete cessation/arrest of flow when a liquid formulation transforms into a gel.

Some embodiments of the invention will now be described in detail in the following Examples. Unless otherwise mentioned, all parts and percentages are by weight.

### EXAMPLES

### Example 1 and Comparative Examples A - D: Rheology

Aqueous solutions and dispersions of okara and/or a fiber-containing pectin product having the concentrations listed in Table 1 below were made as follows. The concentrations are by weight, based on the total weight of the composition.

Okara powder and fiber-containing pectin product were used as received without any drying before sample preparation. Okara was acquired from SunOpta, USA as SunOpta S-710. Fiber-containing pectin product in the form of a powder was acquired from Florida Food Products, USA under the trademark FiberGel LC. FiberGel LC is obtained according to the procedure described in U.S. Patent No. 7,833,558.

A pre-weighed amount of water was introduced into a clean glass vial. The water temperature in the vial was adjusted to about 20 °C with stirring using an overhead mixer. A pre-weighed amount (based on sample composition) of okara powder and/or fiber-containing pectin product powder was then introduced with stirring into the water. For formulations where both okara powder and fiber-containing pectin product were used, the powders were pre-blended before adding to water. The resulting solutions or dispersion was stirred for 15 minutes. Subsequently the vial was capped and stored at room temperature for 48 hours before any rheological observations.

**Table 1**

| **(Comp.) Example** | **Okara (%)** | **fiber-containing pectin product (%)** | **Physical appearance of the sample when container is inverted (at room temperature, 48 h after sample preparation)** |
|---|---|---|---|
| A | 5 | - | Liquid, flows under influence of gravity |
| B | 6 | - | Liquid, flows under influence of gravity |
| C | - | 1 | Liquid, flows under influence of gravity |
| D | - | 6 | Liquid, flows under influence of gravity |
| 1 | 5 | 1 | Gel formed, does not flow under influence of gravity; |
| | | | gel is strong enough to support its own weight |

Table 1 above illustrates that okara and fiber-containing pectin product have a synergistic effect in thickening aqueous compositions. The composition of Example 1, which totally contains 6 wt.-% of a combination of okara and fiber-containing pectin product, forms a gel. In contrast thereto, Comparative Examples B and D, which contain the same amount of either okara alone or citrus fiber alone do not form a gel.

As indicated above, the fiber-containing pectin product utilized in the present examples is obtained according to the procedure described in U.S. Patent No. 7,833,558. U.S. Patent No. 7,833,558 discloses that the fiber-containing pectin product is able to form a stable gel or a viscous solution with calcium ions in an aqueous solution containing from 25 to 65% by weight of saccharose, the pH of the solution being in the range of 1-7, such as about 3. Unfortunately, many food compositions do not comprise such amounts of calcium ions and saccharose and do not have the required pH, which severely limits the utility of the fiber-containing pectin product as gelling agent in food products other than jam or marmalades.

To evaluate the gelation properties of the fiber-containing pectin product utilized in the present invention, varying concentrations of fiber-containing pectin product were mixed with water and varying concentrations of calcium chloride. The mixtures were visually inspected. The results are listed in Table 2 below.

The results in Table 2 below illustrate that the fiber-containing pectin product utilized in the Examples of the present invention only forms a gel when mixed with water in the presence of calcium ions. The results show that an aqueous composition comprising fiber-containing pectin product alone does not form a gel in the absence of calcium ions.

In contrast thereto, the results in Table 1 further above illustrate the surprising finding that an aqueous composition comprising Okara and fiber-containing pectin product in combination is able to form a gel, even in the absence of calcium ions.

**Table 2**

| | % fiber-containing pectin product | | | | | | | | | | | |
|---|---|---|---|---|---|---|---|---|---|---|---|---|
| % CaCl₂ | 0.0 | 0.25 | 0.5 | 0.75 | 1.0 | 1.25 | 1.5 | 1.75 | 2.0 | 2.25 | 2.5 | 3.0 |
| 0.0 | No* | No* | No* | No* | No* | No* | No* | No* | No* | No* | No* | No* |
| 0.1 | onset gelation visible | | | Gel formation is increasingly visible | | | | | | | | |
| 0.25 | | | | | | | | | | | | |
| 0.5 | | | | | | | | | | | | |
| 0.75 | slight gel formation | visible gel formation | | Clearly shaped gels | | | | | | | | |
| 1.0 | | | | | | | | | | | | |
| 1.5 | | | | | | | | | | | | |
| 2.0 | | | | | | | | | | | | |

| | | | | | | | | | | | | |
|---|---|---|---|---|---|---|---|---|---|---|---|---|
| * No gelation at 0.0 % CaCl₂ concentration, independent of concentration of fiber-containing pectin product | | | | | | | | | | | | |

### Examples 2 and 3 and Comparative Examples E - H: Use in Soy Patties

Soy patties were prepared from the formulations listed in Table 3 below. The amounts are percent by weight, based on the weight of the formulation.
Ingredients were as follows:
Soyl = Response™ 4401 soy protein from Dupont Corporation;
Soy2 = Response™ 4320 soy protein from Dupont Corporation;
Gluten = FP™ 600 modified wheat gluten from MPG Ingredients;
Oil = vegetable oil;
Flavor = beef flavoring;
Sugar = Clintose™ dextrose from ADM Corporation;
Okara = Okara from SunOpta S-710; and
FiberGel LC = fiber-containing pectin product from Florida Food Products. FiberGel LC is a fiber-containing pectin product that is obtained according to the procedure described in U.S. Patent No. 7,833,558.

The ingredients were mixed as follows. Gluten, okara (if present) and FiberGel LC (if present) were mixed as dry powders in a mixer. Water at 5°C was added, and the mixture was agitated with a whip attachment at medium speed until a uniform slurry was formed. Flavoring, sugar, and NaCl were added, and the agitation continued for 1 minute at high speed. Then Soyl was added, and the formulation was mixed for 5 minutes, continually pushing the mixture down on the sides of the container. Then Soy2 was added, and the formulation was mixed for 5 minutes, continually pushing the mixture down on the sides of the container. Then oil was added, and the formulation was mixed for 5 minutes, continually pushing the mixture down on the sides of the container. The mixture was placed in a refrigerator at 5°C for 2 hours.

To form each patty, 80 g of the mixture was placed into a cylindrical mold. Mold dimensions were 1 cm height and 9 cm diameter. Patties were then placed in a freezer at a temperature of -15 to -20°C until frozen, and then each patty was separately wrapped and re-placed into the freezer until testing.

Patties were removed from the freezer and cooked as follows. Frozen patties were placed in a lightly oiled (PAM™ cooking spray) 25.4 cm (10 inch) diameter frying pan on medium heat for 4 minutes on each side.

One patty was heated at a time and immediately transferred to a texture analyzer to be tested at an internal patty temperature of 70°C to 75°C. If the patties held their shape, they were tested for hardness (strength). The patty hardness was measured with a Texture Analyzer (model TA.XTPlus, from Texture Technologies, Corp, NY, USA) using a 2.5 cm diameter acrylic cylindrical probe. The patty was compressed at the approximate middle point with the probe for the patty hardness. As a result of these characterization techniques, a plot of the resulting force vs. time compression was obtained. The maximum force is taken as the patty hardness force in Newtons.

**Table 3**

| **(Comp.) Example** | **E (wt.%)** | **F (wt.%)** | **G (wt.%)** | **H (wt.%)** | **2 (wt.%)** | **3 (wt.%)** |
|---|---|---|---|---|---|---|
| water | 63.51 | 63.51 | 63.51 | 63.51 | 63.51 | 63.51 |
| Soyl | 21.32 | 19.10 | 17.48 | 20.48 | 18.23 | 16.86 |
| Gluten | 4.53 | 4.53 | 4.53 | 4.53 | 4.53 | 4.53 |
| Oil | 3.18 | 3.18 | 3.18 | 3.18 | 3.18 | 3.18 |
| Soy2 | 4.04 | 3.76 | 2.88 | 3.88 | 3.63 | 2.51 |
| Flavor | 2.72 | 2.72 | 2.72 | 2.72 | 2.72 | 2.72 |
| sugar | 0.45 | 0.45 | 0.45 | 0.45 | 0.45 | 0.45 |
| NaCl | 0.25 | 0.25 | 0.25 | 0.25 | 0.25 | 0.25 |
| okara | 0 | 2.5 | 5.0 | 0 | 2.5 | 5.0 |
| FiberGel LC | 0 | 0 | 0 | 1.0 | 1.0 | 1.0 |
| Average patty strength, N | Unable to measure | Unable to measure | Unable to measure | Unable to measure | 6 | 17 |
| Appearance after cooking | Broken patty, just crumbs | Broken patty, just crumbs | Broken patty | Broken patty, just crumbs | Weak patty with some cracks | good; coherent patty |

The results in Table 3 above illustrate the synergistic effect of okara and a fiber-containing pectin product in binding a solid food formulation, such as patties, and increasing the coherence and/or strength of the food formulation. The individual use of 2.5 % okara (Comparative Example F) or 1 % fiber-containing pectin product (Comparative Example H) in a patty did not show any effect in improving the coherence of the patty, as compared to a comparable composition wherein neither okara nor fiber-containing pectin product was used (Comparative Example E). In all patties of Comparative Examples E, F and H just crumbs of about the same sizes resulted. Increasing the amount of okara to 5 % did not result in a coherent patty either (Comparative Example G). Surprisingly, a coherent patty could be achieved when using the combination of only 2.5 % okara and 1 % fiber-containing pectin product (Example 2).

## Claims

1. A composition comprising
(a) okara, and
(b) a fiber-containing pectin product,
wherein the weight ratio between components (a) and (b) is from 4: 1 to 6 : 1.

2. The composition of claim 1 comprising from 0.5 to 15 weight percent of component (a), based on the total weight of the composition.

3. The composition of claim 1 or 2 comprising from 0.2 to 5 weight percent of component (b), based on the total weight of the composition.

4. The composition of any one of claims 1 to 3 comprising at least 4 weight percent of component (a), based on the total weight of the composition.

5. The composition of any one of claims 1 to 4 additionally comprising from 20 to 80 weight percent of water, based on the weight of the composition.

6. The composition of any one of claims 1 to 5 additionally comprising from 5 to 80 weight percent, based on the weight of the composition, of one or more dry ingredients selected from the group consisting of sodium chloride, one or more sugars, flavoring agents, gluten, one or more proteins in a form different from okara or whole soy, and mixtures thereof.

7. The composition of claim 6 comprising from 5 to 40 weight percent of one or more plant proteins in a form different from okara and different from whole soy.

8. The composition of any one of claims 1 to 7 in the form of a solid food composition.

9. The composition of claim 8 being a soy patty.

10. A method of improving one or more of the properties of a food composition selected from cohesion, firmness, juiciness, freeze thaw stability or texture; resistance to shrinking during cooking, or boil-out control, which method comprises the step of incorporating into the composition a combination of (a) okara and (b) a fiber-containing pectin product wherein the weight ratio between components (a) and (b) is from 4: 1 to 6 : 1.

## Patentansprüche

1. Zusammensetzung umfassend
(a) Okara und
(b) ein faserhaltiges Pektinprodukt,
wobei das Gewichtsverhältnis zwischen den Komponenten (a) und (b) 4 : 1 bis 6 : 1 beträgt.

2. Zusammensetzung nach Anspruch 1, umfassend 0,5 bis 15 Gewichtsprozent der Komponente (a), auf das Gesamtgewicht der Zusammensetzung bezogen.

3. Zusammensetzung nach Anspruch 1 oder 2, umfassend 0,2 bis 5 Gewichtsprozent der Komponente (b), auf das Gesamtgewicht der Zusammensetzung bezogen.

4. Zusammensetzung nach irgendeinem der Ansprüche 1 bis 3, umfassend mindestens 4 Gewichtsprozent der Komponente (a), auf das Gesamtgewicht der Zusammensetzung bezogen.

5. Zusammensetzung nach irgendeinem der Ansprüche 1 bis 4, zusätzlich 20 bis 80 Gewichtsprozent Wasser, auf das Gewicht der Zusammensetzung bezogen, umfassend.

6. Zusammensetzung nach irgendeinem der Ansprüche 1 bis 5, zusätzlich 5 bis 80 Gewichtsprozent, auf das Gewicht der Zusammensetzung bezogen, eines oder mehrerer trockener Bestandteile umfassend, ausgewählt aus der Gruppe bestehend aus Natriumchlorid, einem oder mehreren Zuckern, Geschmacksmitteln, Gluten, einem oder mehreren Proteinen in einer Form, die von Okara oder Ganzsoja verschieden ist, und Mischungen davon.

7. Zusammensetzung nach Anspruch 6, umfassend 5 bis 40 Gewichtsprozent eines oder mehrerer Pflanzenproteine in einer Form, die von Okara verschieden und von Ganzsoja verschieden ist.

8. Zusammensetzung nach irgendeinem der Ansprüche 1 bis 7 in Form einer festen Nahrungsmittelzusammensetzung.

9. Zusammensetzung nach Anspruch 8, die ein Soyaplätzchen ist.

10. Verfahren zum Verbessern einer oder mehrerer der Eigenschaften einer Nahrungsmittelzusammensetzung ausgewählt unter Kohäsion, Festigkeit, Saftigkeit, Gefrier-Tau-Stabilität oder Struktur; Resistenz gegen Schrumpfen während des Kochens oder Auskochregulierung, welches Verfahren den Schritt umfasst des Integrierens, in die Zusammensetzung, einer Kombination von (a) Okara und (b) eines faserhaltigen Pektinprodukts, wobei das Gewichtsverhältnis zwischen den Komponenten (a) und (b) 4 : 1 bis 6 : 1 beträgt.

## Revendications

1. Composition comprenant
(a) de l'okara, et
(b) un produit pectinique contenant une fibre,
le rapport en poids entre les composants (a) et (b) étant de 4:1 à 6:1.

2. Composition selon la revendication 1, comprenant de 0,5 à 15 pour cent en poids du composant (a), sur la base du poids total de la composition.

3. Composition selon la revendication 1 ou 2, comprenant de 0,2 à 5 pour cent en poids du composant (b), sur la base du poids total de la composition.

4. Composition selon l'une quelconque des revendications 1 à 3, comprenant au moins 4 pour cent en poids du composant (a), sur la base du poids total de la composition.

5. Composition selon l'une quelconque des revendications 1 à 4, comprenant additionnellement de 20 à 80 pour cent en poids d'eau, sur la base du poids de la composition.

6. Composition selon l'une quelconque des revendications 1 à 5, comprenant additionnellement de 5 à 80 pour cent en poids, sur la base du poids de la composition, d'un ou plusieurs ingrédients secs, sélectionnés dans le groupe constitué du chlorure de sodium, d'un ou plusieurs sucres, d'agents aromatisants, de gluten, d'une ou plusieurs protéines sous une forme différente de l'okara ou du soja complet, et de leurs mélanges.

7. Composition selon la revendication 6, comprenant de 5 à 40 pour cent en poids d'une ou plusieurs protéines d'origine végétale sous une forme différente de l'okara et différente du soja complet.

8. Composition selon l'une quelconque des revendications 1 à 7 sous la forme d'une composition alimentaire solide.

9. Composition selon la revendication 8 étant une boulette de soja.

10. Procédé d'amélioration d'une ou plusieurs des propriétés d'une composition alimentaire sélectionnées parmi la cohésion, la fermeté, le juteux, la stabilité à la congélation-décongélation ou la texture; la résistance au rétrécissement durant la cuisson, ou le contrôle du débordement, lequel procédé comprenant l'étape d'incorporation dans la composition d'une combinaison de (a) l'okara et (b) d'un produit pectinique contenant une fibre où le rapport en poids entre les composants (a) et (b) est de 4:1 à 6:1.
